# EUROPEAN PATENT SPECIFICATION

(11) **EP 0 538 909 B1**
(45) Date of publication and mention of the grant of the patent: **23.04.1997**
(21) Application number: 92121695.8
(22) Date of filing: 05.03.1990
(51) Int. Cl.: F16D 65/56

(54) **Automatic adjuster for drum brake**
Automatische Nachstellvorrichtung für Trommelbremse
Dispositif d'ajustement automatique pour frein à tambour

(30) Priority: 11.03.1989 GB 8905618
(43) Date of publication of application: 28.04.1993
(62) Divisional of application: 90302309.1
(73) Proprietor: AUTOMOTIVE PRODUCTS PLC, Leamington Spa Warwickshire CV31 3ER (GB)
(72) Inventor: Quiney, Kenneth Maurice, Birmingham, West Midlands B13 0DA (GB); Haines, William Ernest, Southam, Warwickshire CV33 0EU (GB); Lloyd, Alexander John, Leamington Spa, Warwickshire CV31 2NB (GB); Hadley, Clive Samuel, Knowle, Solihull B93 0ER (GB); King, William Arthur, Cubbington, Leamington Spa CV32 7LD (GB)
(74) Representative: Stanley, Michael Gordon

(56) References cited:
- EP-A- 0 216 478
- FR-A- 2 587 428
- GB-A- 1 287 884
- US-A- 2 570 398

## Description

This invention relates to an automatic adjuster for a drum brake and is particularly concerned with drum brakes in which a strut is interposed between ends of brake shoes to limit return movement of the brake shoes upon release of the brakes. Automatic adjustment means may be incorporated in the strut to adjust the length of the strut to take account of wear of the friction linings of the brake shoes and maintain the clearance between the friction linings and the brake drums within a predetermined range.

One method of adjusting the length of the strut is to include a screw mechanism which is operated by a pawl and ratchet mechanism, in response to relative movement of the brake shoes upon hydraulic brake actuation. Hitherto, the pawl mechanism of such adjusters has been pivotally mounted between one of the shoes and the strut, so that the pawl can follow movement of the shoe relative to strut which would be located with respect to the other shoe. These pawl mechanisms require one or more spring elements to maintain them in engagement with the shoe and ratchet wheel. Such mechanisms must be located in the confined space between the brake shoes and the wheel hub which imposes limitations on their design which will adversely affect their operation. Furthermore, such pawl mechanisms can easily become clogged with debris resulting from wear of the friction linings.

British Patent 1,287,884 discloses an adjustment mechanism in which the strut includes a screw adjuster in which two parts of the strut move apart upon hydraulic operation of the brake. A leaf spring is attached between the two parts of the strut so that it is bowed when the strut is under tension. The spring has a pawl formation which engages a ratchet wheel, so that when the brake shoes move apart upon hydraulic brake actuation, the spring will force the two parts of the strut apart and in so doing will flatten causing the pawl formation to rotate the ratchet wheel which in turn rotates the screw adjuster to lengthen the strut. This type of adjustment mechanism can suffer from the problem of over adjustment at high brake temperatures.

French patent application FR 25 87 428 discloses a different type of brake drum adjustment mechanism to GB 1 287 884 in which over adjustment at high brake temperature is prevented by a temperature sensitive element.

The present invention provides a modification to the type of adjuster disclosed in British Patent 1,287,884, which at least mitigates the above high temperature over adjustment problem.

Accordingly there is provided an automatic adjuster for an internal shoe drum brake comprises a strut adapted to non-rotatably engage one brake shoe at one end and a second brake shoe at the other end; said strut having three coaxial members, a first member being interconnected with an intermediate member by means of inter-engaging thread formations, a second member being slidably interconnected to the intermediate member and free to rotate relatively thereto, a sleeve member mounted for rotation on the intermediate member and located axially with respect thereto, a ratchet wheel being provided on the intermediate member between said second end member and said sleeve member for rotation with the intermediate member, a leaf spring acting between said second end member and sleeve member to bias the second end member and intermediate member apart, characterised in that a temperature sensitive element is provided on one of said second end member or sleeve member, a formation being provided on said temperature sensitive element to engage a corresponding formation on said other of the second end member or sleeve member when the temperature of the brake rises above a predetermined value, inter-engagement of the corresponding formations preventing relative movement of the second end member and intermediate member.

The temperature sensitive element of the brake adjuster described above will prevent over-adjustment of the strut when the clearance between the friction linings and brake drum increases due to expansion of the drum.

Various embodiments of the invention are now described, by way of example only, with reference to the accompanying drawings, in which:-
Figure 1 is a plan view of a drum brake formed in accordance with the present invention;
Figure 2 is a section along the line II-II of Figure 1;
Figure 3 is a plan view of the spring element used in the brake illustrated in Figure 1
Figure 4 is a view similar to Figure 3 of an alternative form of drum brake;
Figure 5 shows a modification to the automatic adjuster of the brake illustrated in Figure 1;
Figure 6 is a perspective view of a modified detent member for the brake adjuster illustrated in Fig 5;
Figure 7 is an alternative modified version of the automatic adjuster used in the brake illustrated in Figure 1;
Figure 8 illustrates the sleeve member of the automatic adjuster illustrated in Figure 7 before the temperature sensitive element is attached thereto;
Figure 9 is a view similar to Figure 2 of a further modification to the adjuster illustrated in Figure 1;
Figure 10 is a plan view of the adjuster illustrated in Figure 9;
Figure 11 illustrates in part section a modification to the leaf spring element used in the above embodiments of the invention.

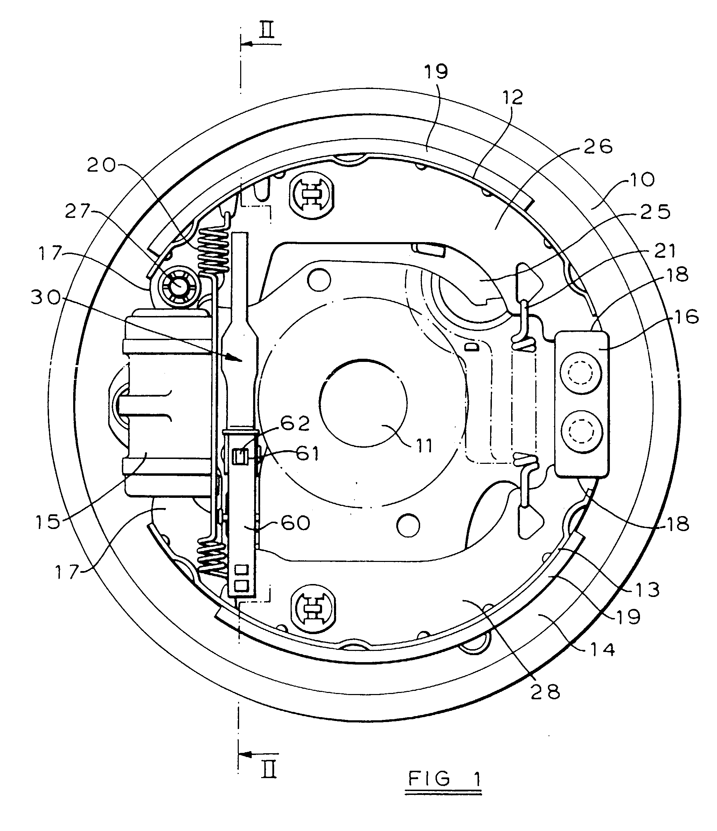

As illustrated in Figure 1, a drum brake comprises a drum 10 mounted for rotation with a hub 11. A pair of brake shoes 12 and 13 are mounted on a backing plate 14 between a double acting hydraulic cylinder 15 and an abutment 16. One end 17 of each shoe 12, 13 engages a piston of the hydraulic cylinder 15 and the other end 18 engages the abutment 16, so that upon actuation of the hydraulic cylinder the brake shoes 12 and 13 will be forced apart pivotting on the abutment 16, so that friction linings 19 on the brake shoes 12, 13 will be forced into frictional engagement with the brake drum 10. A pair of pull-off springs 20, 21 act between the brake shoes 12 and 13 urging them together, so that when the hydraulic cylinder 15 is released, the brake shoes 12, 13 will move away from the brake drum 10.

A handbrake lever 25 is pivotted to web portion 26 of brake shoe 12 by means of a pivot 27. A strut 30 engages the web portions 26 and 28 of brake shoes 12 and 13 to limit movement of one brake shoe 12 towards the other 13 and thus the clearance between the friction linings 19 and brake drum 10.

Handbrake lever 25 also engages the strut 30 so that pivotting of the handbrake lever 25 clockwise as illustrated in Figure 1, about its pivot 27 will cause the brake shoes 12 and 13 to move apart so that the friction linings 19 engage the drum 10.

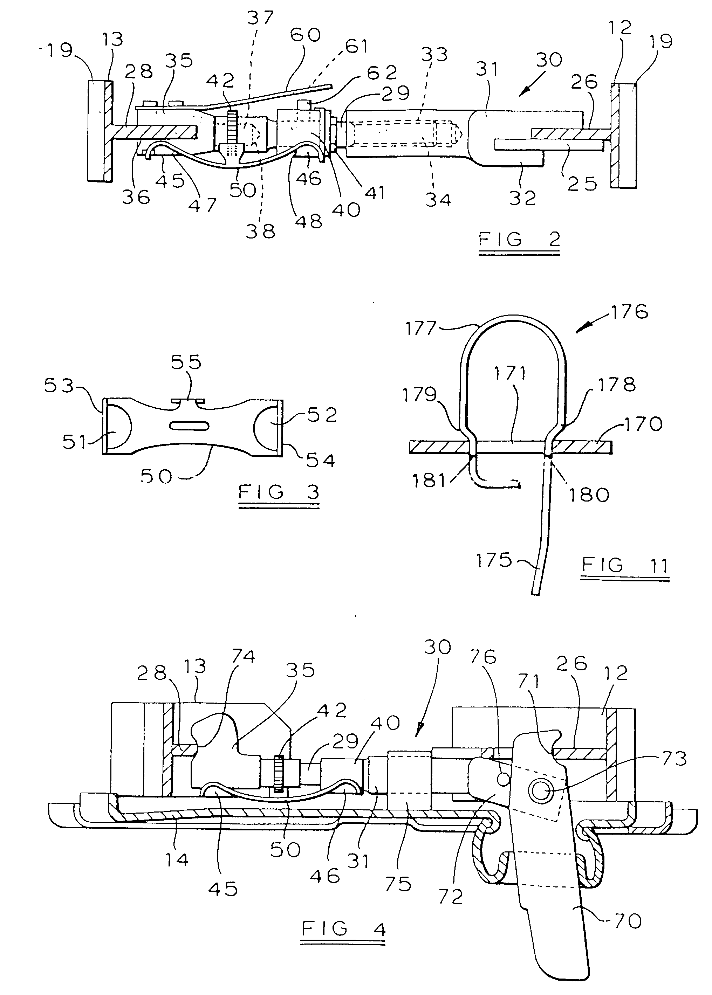

As illustrated in greater detail in Figure 2, the strut 30 comprises three members, a first end member 31 having a forked end 32 which is adapted to engage the web portion 26 of brake shoe 12 and handbrake lever 25, to non-rotatably locate that end of the strut 30 with respect to the shoe 12. Member 31 is interconnected to an intermediate member 29 by means of inter-engaging screw threaded formations 33 and 34.

A second end member 35 has a forked end portion 36 which engages the web portion 28 of the shoe 13 to non-rotatably locate that end of the strut 30 with respect to the shoe 13. The end member 35 has spigot portion 37 which slidably and rotatably engages in a socket 38 in the adjacent end of intermediate member 29. A sleeve member 40 being located axially of the intermediate member 29 by means of circlip 41. A ratchet wheel formation 42 is provided on the intermediate member 29 for rotation therewith, between the end thereof engaging end member 35 and the sleeve 40.

The end member 35 and sleeve 40 are provided with lugs 45 and 46, the opposed transverse faces 47 and 48 thereof being undercut. A leaf spring element 50 is located under compression between the lugs 45 and 46, so that it bows away from the strut 30. As illustrated in greater detail in Figure 3, apertures 51 and 52 are provided adjacent each end 53 and 54 of the spring element 50 and the ends 53 and 54 are bent so that the portions thereof defining the outer ends of each aperture 51 and 52 extend substantially normal to the plane of the spring element 50. Centrally of the spring element 50, a pawl formation 55 extends substantially normal to the plane of the spring element 50 but in the opposite direction to the end portions 53 and 54. The spring element 50 is located between the end member 35 and sleeve 40, the apertures 51 and 52 engaging over the lugs 45 and 46 respectively, so that the inner edges of apertures 51 and 52 engage the undercut faces 47 and 48, the bent end portions 53 and 54 engaging outer faces of the lugs 45 and 46 respectively. The spring 50 is thereby located axially, radially and rotationally with respect to the end member 35 and sleeve 40. The pawl formation 55 extends towards the strut 30 and into engagement with the ratchet wheel formation 42.

A bimetallic element 60 is secured to end member 35 so that it extends axially of the strut 30 over the sleeve 40. An aperture 61 is provided in the free end of bimetallic element 60 and this is aligned with a corresponding projection 62 on sleeve 40. Under normal operating conditions, the bimetallic element 60 is inclined away from the strut 30 so that it is clear of the projection 62 on sleeve 40. However, when the temperature of the brake rises above a predetermined value, the bimetallic element 60 will bend towards the strut 30 so that the projection 62 engages in the aperture 61. Heat from the brake shoe 13 is readily transferred via end member 35 to the bimetallic element 60.

Under normal hydraulic operation of the brake, the cylinder 15 will force the ends of brake shoes 12 and 13 apart so that the friction linings 19 engage the drum 10. Relative movement of the shoes 12 and 13 will allow the end member 35 of strut 30 to move away from intermediate member 29 under the influence of the spring 50. This movement will cause the spring 50 to flatten so that the pawl formation 55 moves relative to ratchet wheel formation 42 causing the ratchet wheel formation 42 to rotate. Rotation of the ratchet wheel formation 42 will rotate the intermediate member 29 so that the threaded portion 34 thereof is unscrewed relative to threaded portion 33 of end member 31. The effective length of the strut 30 is thereby increased to accommodate wear of the friction linings 19 and maintain the clearance between the friction linings 19 and drum 10 within a predetermined range, when the brake is released. Upon the release of the brake, the shoes will move together under the influence of pull off springs 20 and 21 until end member 35 again abuts the end of the intermediate member 29. This return movement will cause the spring 50 to bow outwardly and the pawl formation 55 to ride up the inclined face of one of the teeth of the ratchet wheel formation 42. The degree of adjustment will depend upon the amount of movement of the brake shoes 12 and 13, the pitch of the teeth on the ratchet wheel formation 42 and the pitch of the threaded formations 33 and 34. The pitch of the teeth on the ratchet wheel formation 42 and the pitch of threads 33 and 34 are selected such that incremental adjustment will occur maintaining the clearance between the friction elements 19 and brake drum 10 within the required range which lies between the minimum running clearance required and the maximum travel permitted by the handbrake mechanism.

If the temperature of the brake rises above a predetermined value, above which automatic adjustment of the strut 30 may cause over-adjustment due to expansion of the brake drum 10, the bimetallic element 60 will engage the projection 62 thus preventing end member 35 from moving away from the intermediate member 29, thereby preventing rotation of the ratchet wheel formation 42 by the pawl formation 55. Relative movement between the shoes 12 and 13 and the strut 30 is permitted by movement of the web portions 26 and 28 in the forked end portions 32 and 36 respectively.

In the modified drum brake illustrated in Figure 4, the handbrake lever 70 is mounted normal to the web portion 26 of brake shoe 12, and passes through the backing plate 14. A notched portion 71 of the handbrake lever 70 engages the web portion 26. A formation 72 on the end of end member 31 of strut 30 is pivotally attached to lever 70 by means of pivot 73, while end member 35 has a formation 74 which engages the web portion 28 of brake shoe 13. The strut 30 is supported against the backing plate 14 by means of a slide block 75 which is located on end member 31. A roll pin 76 is provided through formation 72 of end member 31 to engage the handbrake lever 70, when in its released position, at a point between the pivot 73 and notched portion 71 which abuts the web 26 of shoe 12, so that when the brake is released, the strut 30 will act through handbrake lever 70 to limit relative movement of the shoes 12 and 13 towards one another.

Under hydraulic operation, the brake illustrated in Figure 4 will operate in the same manner as that illustrated in Figures 1 to 3. For handbrake operation, the handbrake lever 70 is pivotted clockwise as illustrated in Figure 4, so that the notched portion 71 will pivot on web 26 of brake shoe 12 and movement of the pivot 73 will cause the brake shoes 12 and 13 to move apart.

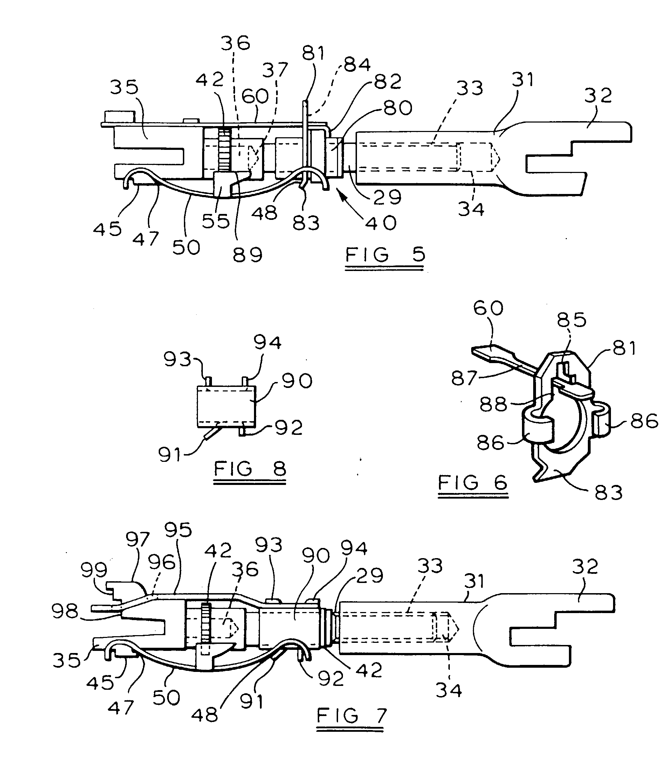

In the modification illustrated in Figures 5 and 6, the sleeve 40 is of stepped cylindrical formation having an enlarged intermediate diameter portion 80. A detent plate 81 is located on the sleeve 40, a tab portion being pressed out of the detent plate 81 and engaging over the enlarged diameter portion 80 of sleeve 40 to locate the detent plate 81 with respect thereto. The lower edge 83 of detent plate 81 is bent away from portion 80 of sleeve 40 to form the undercut face 48 which is engaged by spring 50. The aperture 84 left by tab 82 has a reduced width outer portion 85 similar to that illustrated in Figure 6 and the bimetallic strip element 60 has a correspondingly necked portion 87. The bimetallic strip element 60 is arranged to deflect away from the strut 30 as the temperature increases so that when the operating temperature of the brake is above a predetermined value, the necked portion 87 of bimetallic element 60 will engage in the reduced width portion 85 of aperture 84 to prevent relative axial movement of the end member 35 and intermediate member 29, while under normal operating conditions, the bimetallic element 60 will be located through the wider inner portion 88 of aperture 84 so that it is able to move relative thereto to permit the end member 35 and intermediate member 29 to move apart.

Also in this embodiment, the edge 89 of the pawl formation 55 which engages ratchet wheel formation 42, is extended axially towards the sleeve 40, so that upon relative movement of the end member 35 and intermediate member 29, the pawl formation 55 will remain in engagement with the ratchet wheel formation 42.

In the modification illustrated in Figure 6, the detent plate 81 is formed with lugs 86 on either side to engage portion 80 of the sleeve 40.

In the modification illustrated in Figures 7 and 8, the sleeve 40 is formed as a tubular member 90. Tabs 91 and 92 are pressed out of the tubular member 90, tab 91 being inclined and providing the undercut face 48 for engaging the inner edge of aperture 52 of spring 50 while lug 92 provides location for the outer edge of aperture 52. Two further tabs 93 and 94 are pressed out of the tubular member 90. These tabs 93 and 94 engage through apertures at one end of a bimetallic element 95 and are folded over to locate the bimetallic element 95.

The bimetallic element 95 has an aperture 96 adjacent its free end which engages over a stepped formation 97 on the end member 35. The bimetallic element 95 is located such that under normal operating temperatures, the aperture is located over a reduced length portion 98 of formation 97 so that relative axial movement of end member 35 and intermediate member 29 is permitted, while at operating temperatures above the predetermined value, the aperture 96 is located over an axially elongated portion 98 of formation 97 thereby preventing axial separation of the end member 35 and intermediate member 29.

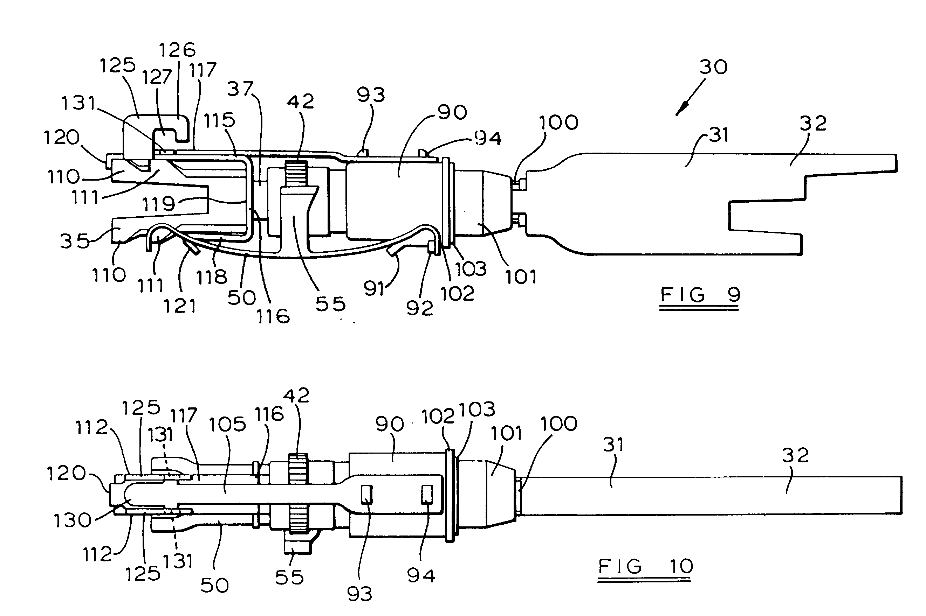

In the embodiment illustrated in Figures 9 and 10, the first member 31 of strut 30 has a screw threaded shank portion 100, which engages a corresponding internally threaded portion of a spindle 101. The spindle 101 is provided with a ratchet wheel formation 42. The spigot portion 37 of member 35 rotatably engages in a plane socket portion in the end of spindle 101 remote from that engaged by member 31. The spindle 101 may thus be rotated relative to the members 31 and 35, by means of pawl 55 and ratchet formation 42, thereby adjusting the length of strut 30, in the manner described above.

A tubular member 90, as illustrated in Figure 8, is rotatably mounted on the spindle 101 and is located thereon by washer 102 and circlip 103 to provide anchor points for one end of spring 50 and for bimetallic element 105.

Member 35 is provided with two pairs of axially spaced lug formations 110 and 111, one lug formation 110 and 111 of each pair being positioned diametrically of the other on a diameter transverse to the slot in the forked end portion 36. Each lug formation 110 and 111 has a radial face at the end thereof remote from spigot portion 27. Flats 112 are provided on the member 35 each side of the lug formations 110 and 111, the lugs 110 and 111 extending circumferentially between flats 112.

A bracket 115 has a central base portion 116 with a pair of arms 117 and 118 extending substantially perpendicular to the same side of base portion 116. The base portion 116 has a central circular aperture which locates over the spigot portion 37 of member 35, so that the central base portion 116 engages a shoulder 119 between the spigot portion 37 and forked end portion 36. One arm 117 extends the full length of the forked end portion 36 of member 35, the end 120 of the arm 117 being bent over to engage the radial end of the adjacent lug formation 110 to axially locate the bracket 115. The end 121 of arm 118 is bent outwardly and towards the spigot formation 37, at a position which is on the same side of lug formation 111 as the spigot formation 37. The bent end 121 of arm 118 serves as an abutment for the spring 50, the outer end 53 of the aperture 51 engaging over the radial face of lug formation 111 to provide axial location. The sides of aperture 51 also engage the flats 112 which define the sides of lug formation 111, thereby preventing rotation of spring 50 and tubular member 90.

A pair of parallel flange formations 125 are provided on either side of arm 117 adjacent the end thereof. These flange formations 125 are provided with projections 126 which extend parallel to arm 117 towards the base portion 116. Recesses 127 are provided in the projections 126. The bimetallic element 105 extends parallel to the arm 117 so that the end 130 thereof locates between the flange formations 125 of bracket 115. The bimetallic element 105 has a pair of laterally extending lugs 131 adjacent end 130, these lugs 131 being located such that when the members of the strut 30 are fully compressed by the pull off springs 20, 21 the lugs 131 will be aligned axially with the recesses 127. Under normal operating temperatures, the lugs 131 are clear of recesses 127, so that adjustment of the strut 30 will occur as described above. However if the temperature of the brake components rises above a predetermined value the bimetallic element 105 will deform so that the lugs 131 engage in recesses 127 preventing further adjustment.

In an alternative embodiment as illustrated in Figure 11, the pawl formation 175 may be formed separately from the spring element 170.

As illustrated in Figure 11, the leaf spring element 170 is formed with an aperture 171 at its midpoint. A clip formation 176 defining pawl formation 175 is located in the aperture 171. The clip formation 176 has a spring formation 177 which is dimensioned to pass through the aperture 171 when compressed. The spring formation 177 has a pair of joggled formations 178 and 179 which abut one side of leaf spring element 170, shoulder portions 180, 181 which are wider than the aperture 171 being provided at each end of the spring formation 177, to abut the other side of the leaf spring element 170. The pawl formation 175 extends from one end of the spring formation 177, an arm 182 extending from the other end of spring formation 177 towards pawl formation 175 to prevent overstressing of the spring formation 177.

With this arrangement, the spring element 170 and clip formation 176 may be made of different materials and/or different thicknesses, so that the resilience of the spring element 170 and pawl formation 175 may be varied as required. Furthermore the clip formation may be pivotal about the abutment of formation 179 with spring element 170, spring formation 177 acting to bias the pawl formation 175 towards the ratchet wheel so that the desired loading of the pawl formation 175 onto the ratchet wheel may be achieved by suitable adjustment of the spring rate of spring formation 177.

## Claims

1. An automatic adjuster for an internal shoe drum brake comprising a strut (30) adapted to non-rotatably engage one brake shoe (12) at one end and a second brake shoe (13) at the other end; said strut (30) having three coaxial members, a first member (31) being interconnected with an intermediate member (29) by means of inter-engaging thread formations (33, 34), a second member (35) being slidably interconnected to the intermediate member (29) and free to rotate relatively thereto, a sleeve member (40;90) mounted for rotation on the intermediate member (29) and located axially with respect thereto, a ratchet wheel (42) being provided on the intermediate member ((29) between said second end member (35) and said sleeve member (40;90) for rotation with the intermediate member (29), a leaf spring (50) acting between said second end member (35) and sleeve member (40;90) to bias the second end member (35) and intermediate member (29) apart, characterised in that a temperature sensitive element (60;95;105) is provided on one of said second end member (35) or sleeve member (40;90), a formation (61;88;96;131) being provided on said temperature sensitive element (60;95;105) to engage a corresponding formation (62;85;97;127) on said other of the second end member (35) or sleeve member (40;90) when the temperature of the brake rises above a predetermined value, inter-engagement of the corresponding formations (61; 62; 85; 88; 96; 97; 131; 127) preventing relative movement of the second end member (35) and intermediate member (29).

2. An automatic adjuster according to Claim 1 characterised in that the temperature sensitive element (60; 95; 105) is a bimetallic strip element.

3. An automatic adjuster according to Claim 1 or Claim 2 characterised in that the temperature sensitive element is secured to the second end member (35).

4. An automatic adjuster according to any one of Claims 1 to 3 characterised in that an aperture (61) is provided in the temperature sensitive element (60), and a projection (62) is provided on the other of the second end member (35) or sleeve member (40), the temperature sensitive element (60) being arranged such that under normal operating conditions it is clear of the projection (62) but above the predetermined operating temperature, the projection (62) extends through the aperture (61) in the temperature sensitive element (60).

5. An automatic adjuster according to any one of Claims 1 to 3 characterised in that the temperature sensitive element (60) extends through an aperture (85, 88) in a plate (81) secured with respect to said other of the second end member (35) or sleeve member (40), the temperature sensitive element (60) having a necked portion (87) corresponding axially with the plate (81) and the aperture (85, 88) having a reduced width portion (85) so that at normal operating temperatures the temperature sensitive element (60) will extend through the wider portion (88) of the aperture (85,88) while above the predetermined operating temperature the necked portion (87) of the temperature sensitive element (60) will engage with the reduced width portion (85) of the aperture (85, 88) to prevent relative movement of said second end member (35) with respect to the sleeve member (40) and intermediate member (29).

6. An automatic adjuster according to any one of Claims 1 to 3 characterised in that the temperature sensitive element (95) has an aperture (96) which engages over a projection (97) on said other of the second end member (35) or sleeve member (90), said projection (97) being stepped axially, the temperature sensitive element (95) being located radially with respect to a shorter axially extending portion (98) of the projection (97) under normal operating conditions and with respect to a longer axially extending portion (99) of the projection (97) when the operating temperature rises above the predetermined temperature.

7. An automatic adjuster according to any one of Claims 1 to 6 characterised in that the second end member (35) is slidingly and rotationally mounted with respect to the intermediate member by means of a spigot formation (37) which engages a socket formation on the intermediate member (29).

8. An automatic adjuster as claimed in Claim 7 when dependent upon Claims 1 to 3, characterised in that the end of the second end member (35) remote from the spigot formation (37) has two pairs of axially spaced lugs (110,111) one lug (110,111) of each pair being disposed diametrically of the other, the end faces of the lugs (110,111) remote from the spigot formation (37) being radial, a bracket member (115) having a base portion (116) with a pair of substantially perpendicular arms (117,118) extending to one side is located on the second end member (35) the spigot (37) locating through an aperture in the base portion (116), one arm (117) of bracket (116) extends along the second end member (35), the end (120) of arm (117) being bent over to engage the radial face of one of the lugs (110) to locate the bracket (115) axially of the second end member (35), the arm (117) defining detent means (127) for engagement by a temperature sensitive element (105), the temperature sensitive element being secured to a sleeve member (90) rotatably mounted on the intermediate member (29).

9. An automatic adjuster according to Claim 8 in which a pair of parallel flange formations (125) are provided axially towards the end of arm (117), the flange formations (125) having axially extending portions (126) with recesses (127) formed therein, the temperature sensitive element (105) extending parallel to arm (117) and between flange formations (125), a pair of laterally extending lugs (131) being provided on the temperature sensitive element (105) for engagement of the recesses (127), when the temperature of the brake rises above a predetermined value.

10. An automatic adjuster according to Claim 8 or 9 characterised in that the end (121) of the other arm (118) is bent outwardly and towards spigot portion (37) at a point intermediate of the intermediate member (29) and lugs (111), the end (121) providing the undercut transverse face for engagement by spring (50) and the radial face and side edges of lug (111) serving to locate the spring (50) axially and rotationally of the second end member (35).

11. An automatic adjuster according to any one of Claims 8 to 10 characterised in that the portion of the second end member (35) defining lugs (110 and 111) is provided with flats (112), lugs (110 and 111) extending circumferentially between the flats (112).

## Patentansprüche

1. Automatische Nachstelleinrichtung für eine Innenbackentrommelbremse, mit einer Druckstrebe (30), die ausgebildet ist, um an einem ersten Ende eine Bremsbacke (12) und an dem anderen Ende eine zweite Bremsbacke (13) drehfest aufzunehmen; wobei die Druckstrebe (30) drei koaxiale Teile aufweist, von denen ein erstes Teil (31) mittels verbindender Gewindeanordnungen (33, 34) mit einem Zwischenteil (29) verbunden ist und ein zweites Teil (35) gleitbeweglich mit dem Zwischenteil (29) verbunden ist und relativ zu diesem frei drehbar ist; ein Buchsenteil (40; 90) drehbar auf dem Zwischenteil (29) angeordnet ist und in Axialrichtung zu diesem positioniert ist; ein Sperrzahnrad (42) auf dem Zwischenteil (29) zwischen dem zweiten Endteil (35) und dem Buchsenteil (40; 90) drehfest zu dem Zwischenteil (29) angeordnet ist; und eine Blattfeder (50) zwischen dem zweiten Endteil (35) und dem Buchsenteil (40; 90) wirkt, um das zweite Endteil (35) und das Zwischenteil (29) auseinanderzudrücken, **dadurch gekennzeichnet,** daß ein temperaturempfindliches Element (60; 95; 105) an dem Endteil (35) oder dem Buchsenteil (40; 90) angeordnet ist, eine Anordnung (61; 88; 96; 131) an dem temperaturempfindlichen Element (60; 95; 105) vorgesehen ist, die mit einer zugeordneten Anordnung (62; 95; 97; 127) an dem anderen Teil, dem zweiten Endteil (35) oder dem Buchsenteil (40; 90), zusammenwirkt, wenn die Temperatur der Bremse über einen vorbestimmten Wert ansteigt, wobei der Eingriff der zugeordneten Anordnungen (61, 62; 85, 88; 96; 97; 131; 127) eine Relativbewegung des zweiten Endteiles (35) und des Zwischenteiles (29) verhindert.

2. Automatische Nachstelleinrichtung nach Anspruch 1, dadurch gekennzeichnet, daß das temperaturempfindliche Element (60; 95; 105) als Bimetallstreifenelement ausgebildet ist.

3. Automatische Nachstelleinrichtung nach Anspruch 1 oder 2, dadurch gekennzeichnet, daß das temperaturempfindliche Element auf dem zweiten Endteil (35) festgelegt ist.

4. Automatische Nachstelleinrichtung nach einem der Ansprüche 1 bis 3, dadurch gekennzeichnet, daß an dem temperaturempfindlichen Element (60) eine Öffnung (61) und an dem anderen Teil, dem zweiten Endteil (35) oder dem Buchsenteil (40), ein Ansatz (62) vorgesehen ist, wobei das temperaturempfindliche Element (60) derart ausgebildet ist, daß es unter normalen Betriebsbedingungen von dem Ansatz (62) beabstandet ist, jedoch bei Überschreitung einer vorbestimmten Betriebstemperatur der Ansatz (62) in die Öffnung (61) in dem temperaturempfindlichen Element (60) eingreift.

5. Automatische Nachstelleinrichtung nach einem der Ansprüche 1 bis 3, dadurch gekennzeichnet, daß sich das temperaturempfindliche Element (60) durch eine Öffnung (85, 88) in einer Platte (81) erstreckt, die bezüglich des anderen Teils, des zweiten Endteils (35) oder des Buchsenteils (40) festgelegt ist, das temperaturempfindliche Element (60) einen Halsbereich (87) aufweist, der in Axialrichtung mit der Platte (81) und der einen reduzierten Breitenbereich (85) aufweisenden Öffnung (85, 88) korrespondiert, so daß sich unter normalen Betriebsbedingungen das temperaturempfindliche Element (60) durch den breiteren Bereich (88) der Öffnung (85, 88) erstreckt, während beim Überschreiten der vorbestimmten Betriebstemperatur der Halsbereich (87) des temperaturempfindlichen Elements (60) in den breitenreduzierten Bereich (85) der Öffnung (85, 88) eingreift, um eine Relativbewegung des zweiten Endteiles (35) bezüglich des Buchsenteiles (40) und des Zwischenteiles (29) zu verhindern.

6. Automatische Nachstelleinrichtung nach einem der Ansprüche 1 bis 3, dadurch gekennzeichnet, daß das temperaturempfindliche Element (95) eine Öffnung (96) aufweist, die einen Ansatz (97) an dem anderen Teil, dem zweiten Endteil (35) oder dem Buchsenteil (90), übergreift, wobei der Ansatz (97) in Axialrichtung abgestuft ist und das temperaturempfindliche Element (95) unter normalen Betriebsbedingungen radial an einem sich in Axialrichtung kürzer erstreckenden Bereich (98) des Ansatzes (97) angeordnet ist und wenn die Betriebstemperatur über eine vorbestimmte Temperatur ansteigt an einem sich in Axialrichtung länger erstreckenden Bereich (99) des Ansatzes (97) angeordnet ist.

7. Automatische Nachstelleinrichtung nach einem der Ansprüche 1 bis 6, dadurch gekennzeichnet, daß das zweite Endteil (35) mittels einer Zapfenanordnung (37) bezüglich des Zwischenteils gleitbeweglich und drehbeweglich angeordnet ist, die mit einer an dem Zwischenteil (29) vorgesehenen Buchsenanordnung zusammenwirkt.

8. Automatische Nachstelleinrichtung nach Anspruch 7 in Abhängigkeit von Anspruch 1 bis 3, dadurch gekennzeichnet, daß das von der Zapfenanordnung (37) entfernte Ende des zweiten Endteiles (35) zwei Paare von axial beabstandeten Ansätzen (110, 111) aufweist, wobei ein Ansatz (110, 111) jedes Paares diametral zu dem anderen angeordnet ist, daß die von der Zapfenanordnung (37) entfernten Endseiten der Ansätze (110, 111) radial ausgerichtet sind, daß ein Klammerteil (115), das einen Basisbereich (116) mit einem Paar von im wesentlichen senkrechten, sich zu einer Seite erstreckenden Armen (117, 118) aufweist, auf dem zweiten Endteil (35) angeordnet ist, wobei der Zapfen (37) durch eine Öffnung in den Basisbereich (116) durchtritt, daß sich ein Arm (117) der Klammer (116) längs des zweiten Endteiles (35) erstreckt, daß das Ende (120) des Armes (117) umgebogen ist, um mit der Radialseite eines der Ansätze (110) zusammenzuwirken, um die Klammer (115) in Axialrichtung zu dem zweiten Endteil (35) zu fixieren, daß der Arm (117) eine Halteeinrichtung (127) zum Zusammenwirken mit einem temperaturempfindlichen Element (105) aufweist, wobei das temperaturempfindliche Element auf einem Buchsenteil (90) festgelegt ist, das drehbeweglich auf dem Zwischenteil (29) angeordnet ist.

9. Automatische Nachstelleinrichtung nach Anspruch 8, bei der ein Paar von parallelen, sich in Axialrichtung gegen das Ende des Armes (117) erstreckenden Flanschanordnungen (125) bereitgestellt ist, wobei die Flanschanordnungen (125) sich in Axialrichtung erstreckende Bereiche (126) mit hierin eingebrachten Aussparungen (127) aufweisen, sich das temperaturempfindliche Element (105) sich parallel zu dem Arm (117) und zwischen den Flanschanordnungen (125) erstreckt, und ein Paar von sich zur Seite erstreckenden Ansätzen (131) an dem temperaturempfindlichen Element (105) zum Zusammenwirken mit den Aussparungen (127) vorgesehen ist, wenn die Temperatur in der Bremse über einen vorbestimmten Wert ansteigt.

10. Automatische Nachstelleinrichtung nach Anspruch 8 oder 9, dadurch gekennzeichnet, daß das Ende (121) des anderen Armes (118) an einem Punkt zwischen dem Zwischenteil (29) und den Ansätzen (111) nach außen und in Richtung der Zapfenanordnung (37) gebogen ist, wobei das Ende (121) die hinterschnittene Querseite zum Zusammenwirken mit der Feder (50) darstellt, und die Radialseite und die Seitenkanten des Ansatzes (111) dazu dienen, die Feder (50) in Axialrichtung und in Drehrichtung auf dem zweiten Endteil (35) anzuordnen.

11. Automatische Nachstelleinrichtung nach einem der Ansprüche 8 bis 10, dadurch gekennzeichnet, daß der die Ansätze (110 und 111) aufweisende Bereich des zweiten Endteiles (35) Vertiefungen (112) aufweist, wobei die Ansätze (110 und 111) sich am Umfang zwischen den Vertiefungen (112) erstrecken.

## Revendications

1. Dispositif automatique de réglage pour un frein à tambour à patin intérieur comprenant une entretoise (30) apte à venir en prise non rotative avec un patin de frein (12) à une extrémité, et avec un second patin de frein (13) à l'autre extrémité ; ladite entretoise (30) comportant trois éléments coaxiaux, un premier élément (31) relié à un élément intermédiaire 29 grâce à des formations filetées (33, 34) de prise, un second élément (35) relié coulissant à l'élément intermédiaire (29) et libre en rotation par rapport à lui, un élément de manchon (40 ; 90) monté en rotation sur l'élément intermédiaire (29) et placé dans une position axiale par rapport à lui, une roue à rochet (42) étant prévue sur l'élément intermédiaire (29) entre ledit second élément d'extrémité (35) et ledit élément de manchon (40;90) pour être entraînée en rotation avec l'élément intermédiaire (29), une lame de ressort (50) agissant entre ledit second élément d'extrémité (35) et ledit élément de manchon (40;90) pour solliciter le second élément d'extrémité (35) et l'élément intermédiaire (29), en les espaçant, caractérisé en ce qu'un élément sensible à la température (60;95;105) est prévu sur l'un parmi ledit second élément d'extrémité (35) et l'élément de manchon (40;90), une formation (61;88;96;131) étant prévue sur ledit élément sensible à la température (60;95;105) pour venir en prise avec une formation correspondante (62;85;97;127) sur ledit autre parmi le second élément d'extrémité (35) et l'élément de manchon (40;90) quand la température du frein monte au-dessus d'une valeur prédéterminée, la prise entre elles des formations correspondantes (61; 62; 85; 88; 96; 97; 131; 127) empêchant un mouvement relatif entre le second élément d'extrémité (35) et un élément intermédiaire (29) .

2. Dispositif automatique de réglage selon la revendication 1, caractérisé en ce que l'élément sensible à la température (60; 95; 105) est un élément bimétallique en forme de bande.

3. Dispositif automatique de réglage selon l'une des revendications 1 ou 2, caractérisé en ce que l'élément sensible à la température est fixé sur le second élément d'extrémité (35).

4. Dispositif automatique de réglage selon l'une quelconque des revendications 1 à 3, caractérisé en ce qu'une ouverture (61) est formée dans l'élément sensible à la température (60), et une protubérance (62) est prévue sur l'autre parmi le second élément d'extrémité (35) et l'élément de manchon (40), l'élément sensible à la température (60) étant disposé de façon que dans des conditions normales de fonctionnement, il se trouve dégagé de la protubérance (62) mais, qu'au dessus de la température de fonctionnement prédéterminée, la protubérance (62) traverse l'ouverture (61) de l'élément sensible à la température (60).

5. Dispositif automatique de réglage selon l'une quelconque des revendications 1 à 3, caractérisé en ce que l'élément sensible à la température traverse une ouverture (85, 88) prévue dans une plaque (81) fixée par rapport audit autre parmi le second élément d'extrémité (35) ou l'élément de manchon (40), l'élément sensible à la température (60) présentant une partie étranglée (87) correspondant dans la direction axiale à la plaque (81) et à l'ouverture (85, 88) ayant une partie de largeur réduite (85) de manière qu'aux températures normales de fonctionnement, l'élément sensible à la température (60) traverse la partie plus large (88) de l'ouverture (85, 88) tandis qu'au-delà d'une température de fonctionnement prédéterminée, la partie étranglée (87) de l'élément sensible à la température (60) vienne en prise avec la partie de largeur réduite (85) de l'ouverture (85, 88) pour empêcher un mouvement relatif dudit second élément d'extrémité (35) par rapport à l'élément de manchon (40) et à l'élément intermédiaire (29).

6. Dispositif automatique de réglage selon l'une quelconque des revendications 1 à 3, caractérisé en ce que l'élément sensible à la température (95) comporte une ouverture (96) qui vient en prise sur une protubérance (97) dudit autre parmi le second élément d'extrémité (35) ou l'élément de manchon (90), ladite protubérance (97) présentant des décrochements dans la direction axiale, l'élément sensible à la température (95) étant disposé dans la direction radiale par rapport à une partie plus courte s'étendant dans la direction axiale (98) de la protubérance (97) dans les conditions normales de fonctionnement, et par rapport à une partie plus longue s'étendant dans la direction axiale (99) de la protubérance (97) quand la température de fonctionnement monte au-dessus de la température prédéterminée.

7. Dispositif automatique de réglage selon l'une quelconque des revendications 1 à 6, caractérisé en ce que le second élément d'extrémité (35) est monté en coulissement et en rotation par rapport à l'élément intermédiaire au moyen d'une formation d'ergot (37) qui vient en prise avec une formation de douille sur l'élément intermédiaire (29).

8. Dispositif automatique de réglage selon la revendication 7 lorsqu'elle dépend des revendications 1 à 3, caractérisé en ce que l'extrémité du second élément d'extrémité (35) éloignée de la formation d'ergot (37) porte deux paires de languettes (110, 111) espacées dans la direction axiale, une des languettes (110, 111) de chaque paire étant diamétralement opposée à l'autre, les faces d'extrémité des languettes (110, 111) éloignées de la formation d'ergot (37) étant radiales, un élément de console (115) ayant une partie de base qui comporte deux bras sensiblement perpendiculaires (117, 118) s'étendant vers un côté est situé sur le second élément d'extrémité (35) l'ergot (37) se plaçant à travers une ouverture de la partie de base (116), un premier bras (117) de la console (116) s'étend le long du second élément d'extrémité (35), l'extrémité (120) du bras (117) étant recourbée pour venir en prise avec la face radiale de l'une des languettes (110) afin de localiser la console (115) dans la direction axiale du second élément d'extrémité (35), le bras (117) définissant un moyen de cliquet (127) avec lequel l'élément sensible à la température (105) vient en prise, l'élément sensible à la température étant fixé sur un élément de manchon (90) monté rotatif sur l'élément intermédiaire (29).

9. Dispositif automatique de réglage selon la revendication 8, dans lequel une paire de formations de brides parallèles (125) sont prévues dans la direction axiale vers l'extrémité du bras (117), les formations de brides (125) ayant des parties (126) s'étendant dans la direction axiale dans lesquelles sont formés des évidements (127), l'élément sensible à la température (105) s'étendant parallèlement au bras (117) et entre les formations de brides (125), une paire de languettes s'étendant latéralement (131) étant prévue sur l'élément sensible à la température (105) pour venir en prise avec les évidements (127), quand la température du frein s'élève au-dessus d'une valeur prédéterminée.

10. Dispositif automatique de réglage selon l'une des revendications 8 ou 9, caractérisé en ce que l'extrémité (121) de l'autre bras (118) est recourbée vers l'extérieur et en direction de la partie d'ergot (37) en un point intermédiaire de l'élément intermédiaire (29) et des languettes (111), l'extrémité (121) présentant une face transversale dépouillée pour venir en prise avec un ressort (50), la face radiale, ainsi que les bords latéraux de la languette (111) servant à positionner le ressort (50) dans la direction axiale, et en rotation par rapport au second élément d'extrémité (35).

11. Dispositif automatique de réglage selon l'une quelconque des revendications 8 à 10, caractérisé en ce que la partie du second élément d'extrémité (35) définissant des languettes (110 et 111) comporte des méplats (112), les languettes (110 et 111) s'étendant sur la circonférence entre les méplats (112).
